# DEMANDE DE BREVET EUROPEEN

(11) **EP 4 174 797 A1**
(43) Date de publication de la demande: **03.05.2023**
(21) Numéro de dépôt: 22203664.2
(22) Date de dépôt: 25.10.2022
(51) Int. Cl.: G06V 10/82, G06V 20/52

(54) **PROCÉDÉ D'ÉVALUATION DU NOMBRE DE DÉPLACEMENTS D'USAGERS PASSANT PAR UN POINT DE PASSAGE DONNÉ PAR COUPLE ORIGINE-DESTINATION**

(30) Priorité: 29.10.2021 FR 2111544
(71) Demandeur: Alyce, 92330 Sceaux (FR)
(72) Inventeur: HACHEM, Ismaël, 92330 Sceaux (FR)
(74) Mandataire: Cabinet Camus Lebkiri

(57) **Abrégé**

Un aspect de l'invention concerne un procédé d'évaluation du nombre de déplacements d'usagers passant par un point de passage donné, chaque déplacement étant réalisé d'une origine vers une destination définissant un couple origine-destination, l'évaluation étant réalisée par couple origine-destination, le procédé comportant les étapes suivantes :
- Acquisition d'un flux d'images dudit point de passage ;
- Traitement de chaque image d'un ensemble d'images comportant au moins une image du flux d'images acquis, l'étape de traitement comprenant les sous-étapes suivantes :
- Détection de chaque usager présent dans l'image à l'aide d'un réseau de neurones artificiels, le réseau de neurones artificiels ayant été préalablement entraîné de manière supervisée sur une base de données d'entraînement pour obtenir un réseau de neurones artificiels entraîné capable de détecter à partir d'une image, chaque usager dans l'image, la base de données d'entraînement comprenant une pluralité d'images chacune associée à la position de chaque usager dans l'image ;
- Comptage automatique du nombre d'usagers détecté dans l'image pour obtenir des données de comptage ;

- Fusion des données de comptage obtenues et de données origine-destination relatives à l'origine et à la destination d'une partie des usagers passant par le point de passage, pour obtenir au moins une matrice origine-destination pour le point de passage.

## Description

### DOMAINE TECHNIQUE DE L'INVENTION

Le domaine technique de l'invention est celui de la mobilité et plus particulièrement celui de l'évaluation du nombre de déplacements passant par un point de passage donné par couple origine-destination.

La présente invention concerne un procédé d'évaluation du nombre de déplacements d'usagers passant par un point de passage donné et plus particulièrement un procédé d'évaluation du nombre de déplacements d'usagers passant par un point de passage donné réalisée par couple origine-destination. La présente invention concerne également un système, un produit-programme d'ordinateur et un support d'enregistrement pour la mise en oeuvre du procédé selon l'invention.

### ARRIERE-PLAN TECHNOLOGIQUE DE L'INVENTION

Pour optimiser la circulation d'usagers dans une zone définie, il est primordial d'adapter les infrastructures de circulation de la zone, telles que les routes, les trottoirs ou encore les gares, à la circulation réelle des usagers dans cette zone.

Pour évaluer la circulation réelle des usagers dans la zone, il est connu d'évaluer la matrice origine-destination de la zone. Celle-ci répertorie pour chaque couple origine-destination, le nombre de déplacements d'usagers passant par la zone allant de l'origine vers la destination.

Classiquement, les matrices origines-destination sont obtenues à partir de données d'enquêtes de circulation réalisées sur le terrain. Cependant, de telles enquêtes nécessitent de nombreux moyens humains et peuvent être difficiles à mettre en oeuvre dans certaines zones, notamment dans celles dans lesquelles les usagers ne s'arrêtent pas, comme les autoroutes.

Pour remédier à ces inconvénients, les données d'enquête sont remplacées par des mégadonnées, c'est-à-dire des données issues du Big Data, permettant de suivre la trajectoire des usagers, par exemple des données issues de la téléphonie mobile ou de systèmes embarqués de géolocalisation. Cependant, ces mégadonnées ne sont pas exhaustives puisque chaque usager n'est pas forcément équipé d'un téléphone mobile et/ou d'un système embarqué de géolocalisation, et ne permettent donc pas de quantifier précisément le nombre de déplacements passant par la zone pour chaque couple origine-destination.

### RESUME DE L'INVENTION

L'invention offre une solution aux problèmes évoqués précédemment, en permettant d'obtenir pour une zone prédéfinie, une matrice origine-destination représentative de la circulation réelle des usagers dans la zone.

Un premier aspect de l'invention concerne un procédé d'évaluation du nombre de déplacements d'usagers passant par un point de passage donné, chaque déplacement étant réalisé d'une origine vers une destination définissant un couple origine-destination, l'évaluation étant réalisée par couple origine-destination, le procédé comportant les étapes suivantes :
- Acquisition d'un flux d'images dudit point de passage ;
- Traitement de chaque image d'un ensemble d'images comportant au moins une image du flux d'images acquis, l'étape de traitement comprenant les sous-étapes suivantes :
   - Détection de chaque usager présent dans l'image à l'aide d'un réseau de neurones artificiels, le réseau de neurones artificiels ayant été préalablement entraîné de manière supervisée sur une base de données d'entraînement pour obtenir un réseau de neurones artificiels entraîné capable de détecter à partir d'une image, chaque usager dans l'image, la base de données d'entraînement comprenant une pluralité d'images chacune associée à la position de chaque usager dans l'image ;
   - Comptage automatique du nombre d'usagers détecté dans l'image pour obtenir des données de comptage ;
- Fusion des données de comptage obtenues et de données origine-destination relatives à l'origine et à la destination d'une partie des usagers passant par le point de passage, pour obtenir au moins une matrice origine-destination pour le point de passage.

Grâce à l'invention, des données origine-destination non exhaustives sont complétées par des données de comptage exhaustives pour reconstruire les flux de déplacements passant par le point de passage étudié.

Les données origine-destination sont non exhaustives car relatives uniquement à une partie des usagers passant par le point de passage étudié, mais fournissent des informations concernant leurs origines et leurs destinations, alors que les données de comptage sont exhaustives car obtenues après détection dans au moins une partie des images d'un flux d'images acquis au point de passage étudié, mais ne comprennent pas d'informations concernant l'origine et la destination des usagers détectés.

L'obtention des données de comptage étant entièrement automatique, le procédé selon l'invention ne nécessite pas de moyens humains et sa mise en oeuvre n'est pas limitée à certaines zones, contrairement à l'état de l'art.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, les données origine-destination comprennent des données issues de systèmes embarqués de géolocalisation et/ou des données issues de la téléphonie mobile.

Les données origine-destination sont donc non exhaustives car chaque usager n'est pas équipé d'un téléphone mobile et/ou d'un système embarqué de géolocalisation.

Selon une variante de réalisation compatible avec la variante de réalisation précédente, l'étape de traitement est réalisée à la volée.

Ainsi, aucune image du flux d'image acquis n'est enregistrée, ni transmise, ce qui permet d'éviter des problèmes de confidentialité.

Selon une variante de réalisation compatible avec les variantes de réalisation précédentes, l'étape de traitement comprend en outre une sous-étape de classification de chaque usager détecté dans l'image à l'aide du réseau de neurones artificiels, le réseau de neurones artificiels ayant été entraîné en outre pour obtenir un réseau de neurones artificiels entraîné capable à partir d'une image, d'affecter une classe à chaque usager détecté dans l'image, la base de données d'entraînement comprenant en outre pour chaque image de la pluralité d'images, la classe associée à chaque usager présent dans l'image.

Il est ainsi possible d'obtenir une matrice origine-destination pour chaque type d'usagers.

Selon une variante de réalisation compatible avec les variantes de réalisation précédentes, l'étape de fusion est réalisée à l'aide de l'algorithme FRATAR.

Selon une variante de réalisation compatible avec les variantes de réalisation précédentes, l'étape de fusion est réalisée pour chaque période d'un ensemble de périodes prédéterminé à partir des données de comptage obtenues et des données origine-destination relatives à la période.

Il est ainsi possible d'obtenir une matrice origine-destination pour chaque période d'un ensemble de périodes calendaires suffisamment longues et sur lesquelles le comportement de mobilité des usagers est homogène.

Un deuxième aspect de l'invention concerne un système pour la mise en oeuvre du procédé selon l'invention, comprenant :
- Un module d'acquisition configuré pour acquérir le flux d'images ;
- Un premier calculateur configuré pour détecter chaque usager présent dans chaque image de l'ensemble d'images à l'aide du réseau de neurones artificiels et pour compter le nombre d'usagers détecté dans chaque image de l'ensemble d'images ;
- Un deuxième calculateur configuré pour fusionner les données de comptage obtenues et les données origine-destination.

Selon une variante de réalisation, le système selon l'invention comporte en outre un capteur de pollution sonore et/ou un capteur de pollution atmosphérique.

Un troisième aspect de l'invention concerne un produit-programme d'ordinateur comprenant des instructions qui, quand le programme est exécuté sur un ordinateur, conduisent celui-ci à mettre en oeuvre les étapes du procédé selon l'invention.

Un quatrième aspect de l'invention concerne un support d'enregistrement lisible par ordinateur comprenant des instructions qui, lorsqu'elles sont exécutées par un ordinateur, conduisent celui-ci à mettre en oeuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un système selon l'invention.

### DESCRIPTION DETAILLEE

Sauf précision contraire, un même élément apparaissant sur des figures différentes présente une référence unique.

Un premier aspect de l'invention concerne un procédé d'évaluation du nombre de déplacements d'usagers passant par un point de passage donné.

Un usager est par exemple un piéton ou un véhicule, telle qu'une voiture, une moto, un vélo, un bus ou encore un camion.

Le point de passage donné est une zone dans laquelle des usagers circulent habituellement, par exemple une autoroute, une place ou encore une gare.

Chaque déplacement est réalisé d'un lieu de départ appelé origine vers un lieu d'arrivée appelé destination, permettant de définir un couple origine-destination associé au déplacement.

L'évaluation est réalisée par couple origine-destination, c'est-à-dire que pour chaque couple origine-destination, le procédé selon l'invention permet d'obtenir le nombre de déplacements d'usagers allant de l'origine vers la destination.

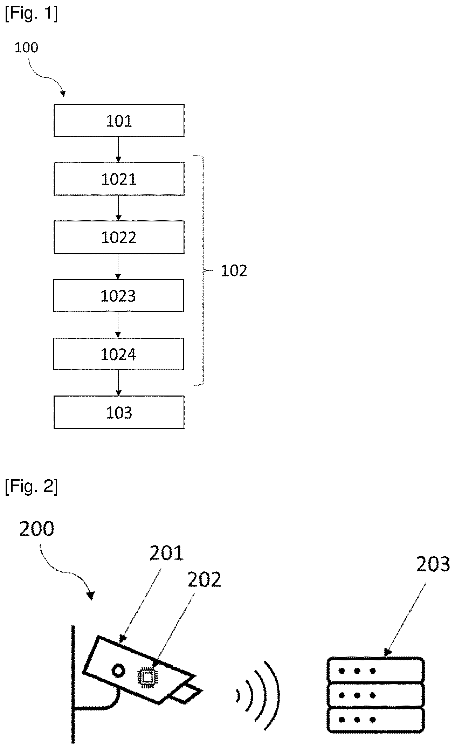

[Fig. 1] La figure 1 est un schéma synoptique illustrant l'enchaînement des étapes du procédé 100 selon l'invention.

Une première étape 101 du procédé 100 selon l'invention consiste à acquérir un flux d'images du point de passage, c'est-à-dire à obtenir des images du point de passage.

L'acquisition est par exemple réalisée en continu.

Le flux d'images comporte une pluralité d'images.

Une deuxième étape 102 du procédé 100 selon l'invention consiste à traiter chaque image d'un ensemble d'images du flux d'images acquis à la première étape 101.

L'ensemble d'images comporte donc au moins une image du flux d'images acquis à la première étape 101.

L'ensemble d'images peut comporter chaque image du flux d'images ou seulement certaines images du flux d'images, par exemple une image sur vingt.

La deuxième étape 102 est par exemple réalisée à la volée, c'est-à-dire que chaque image de l'ensemble d'images est traitée immédiatement après son acquisition à la première étape 101 de manière à ne pas être stockée, ni transmise.

La deuxième étape 102 comporte au moins une première sous-étape 1021 et une deuxième sous-étape 1022.

La première sous-étape 1021 consiste à détecter chaque usager présent dans l'image traitée.

La détection est réalisée à l'aide d'un réseau de neurones artificiels.

Le réseau de neurones artificiels a été préalablement entraîné de manière supervisée sur une base de données d'entraînement pour obtenir un réseau de neurones artificiels entraîné capable de détecter à partir d'une image, chaque usager dans l'image, c'est-à-dire capable de fournir pour chaque usager présent dans l'image, sa position dans l'image.

Le réseau de neurones artificiels est par exemple un réseau de neurones artificiels de détection d'objets pouvant intégrer des couches de convolution d'images, tels que les réseaux de neurones artificiels YOLO, Faster RCNN, RetinaNet ou SSD.

L'entraînement supervisé permet d'entraîner le réseau de neurones artificiels à une tâche prédéfinie, en mettant à jour les paramètres ou poids du réseau de neurones artificiels de manière à minimiser une fonction de coût correspondant à l'erreur entre la donnée de sortie fournie par le réseau de neurones artificiels et la vraie donnée de sortie, c'est-à-dire ce que le réseau de neurones artificiels devrait fournir en sortie pour remplir la tâche prédéfinie sur une certaine donnée d'entrée.

Une base de données d'entraînement comporte donc des données d'entrée, chacune associée à une vraie donnée de sortie.

La base de données d'entraînement comporte une pluralité d'images et pour chaque image, la position de chaque usager dans l'image, par exemple les coordonnées d'une fenêtre englobante pour chaque usager présent dans l'image.

Ainsi, les données d'entrée sont les images et les vraies données de sortie sont les positions des usagers.

L'entraînement supervisé du réseau de neurones artificiels consiste donc à mettre à jour les paramètres du réseau de neurones artificiels de manière à minimiser une fonction de coût correspondant à l'erreur entre chaque position fournie par le réseau de neurones artificiels à partir d'une image de la base de données d'entraînement et la vraie position associée à l'image dans la base de données d'entraînement.

La deuxième sous-étape 1022 consiste à compter automatiquement le nombre d'usagers détecté à la première sous-étape 1021 dans l'image traitée.

La deuxième sous-étape 1022 permet d'obtenir des données de comptage pour l'image.

A l'issue de la deuxième étape 102, des données de comptage sont obtenues pour chaque image de l'ensemble d'images.

La deuxième étape 102 peut comporter une troisième sous-étape 1023 consistant à classifier chaque usager détecté à la première sous-étape 1021 dans l'image traitée.

On entend par « classifier chaque usager détecté », affecter une classe parmi un ensemble de classes à l'usager détecté.

L'ensemble de classes comporte par exemple les classes suivantes : véhicules légers, véhicules utilitaires légers, poids-lourds, bus, motos, vélos et piétons.

La classification est par exemple réalisée à l'aide du réseau de neurones artificiels ayant effectué la détection à la première sous-étape 1021. Dans ce cas, le réseau de neurones artificiels a été entraîné en outre pour obtenir un réseau de neurones artificiels entraîné capable à partir d'une image, d'affecter une classe à chaque usager présent dans l'image.

La base de données d'entraînement comprend alors en outre pour chaque image de la pluralité d'images, la classe associée à chaque usager présent dans l'image.

La deuxième étape 102 peut comporter une quatrième sous-étape 1024 consistant à évaluer la vitesse de chaque usager détecté à la première sous-étape 1021 dans l'image traitée.

Une troisième étape 103 du procédé 100 selon l'invention consiste à fusionner les données de comptage obtenues à l'issue de la deuxième étape 102 avec des données origine-destination.

Les données origine-destination comprennent des données relatives à l'origine et à la destination d'une partie des usagers passant par le point de passage.

Les données origine-destination comprennent par exemple des données issues de systèmes embarqués de géolocalisation ou « Floating Car Data » en anglais et/ou des données issues de la téléphonie mobile ou « Floating Mobile Data » en anglais.

D'autres systèmes peuvent être utilisés pour collecter des données origine-destination, tels que : des systèmes Bluetooth et/ou Wifi, fournissant, par exemple, des identifiants uniques temporaires ou non-temporaires d'appareils de téléphonie mobile ; ou des systèmes de lecture de plaques d'immatriculation par caméra, également appelés systèmes LAPI (« Lecture Automatisée des Plaques d'Immatriculation ») ou ANPR (« Automatic number-plate recognition », en anglais). Il est également possible d'extraire des données origine-destination d'enquêtes de type EMD (« Enquête Ménage Déplacement »). Encore un autre exemple est d'utiliser des relevés de traces GPS, réalisés par une ou plusieurs applications smartphones dédiées aux études de déplacement, pour collecter des données origine-destination.

La troisième étape 103 permet d'obtenir au moins une matrice origine-destination pour le point de passage.

Une matrice origine-destination est un tableau T comprenant i lignes correspondant aux i origines des usagers passant par le point de passage et j colonnes correspondant aux j destinations des usagers passant par le point de passage, rempli avec le nombre de déplacements Tᵢⱼ d'usagers passant par le point de passage allant de l'origine i vers la destination j.

La troisième étape 103 est par exemple réalisée à l'aide de l'algorithme FRATAR, autrement appelé méthode de Furness, permettant de déformer une matrice origine-destination d'entrée comportant uniquement les données origine-destination avec les données de comptage, par redressement itératif par calcul de coefficients en ligne et en colonne successivement.

La troisième étape 103 peut permettre d'obtenir une matrice origine-destination par période d'un ensemble de périodes prédéterminé, en réalisant la fusion uniquement à partir des données de comptage et des données origine-destination correspondant à la période considérée.

L'ensemble de périodes prédéterminé comporte par exemple une première période correspondant aux jours ouvrés, une deuxième période correspondant aux jours de week-end et une troisième période correspondant aux jours de vacances.

Un deuxième aspect de l'invention concerne un système pour la mise en oeuvre du procédé 100 selon l'invention.

[Fig. 2] La figure 2 montre une représentation schématique du système 200 selon l'invention.

Le système 200 selon l'invention comprend :
- un module d'acquisition 201 configuré pour acquérir le flux d'images et donc réaliser la première étape 101 du procédé 100 selon l'invention ;
- un premier calculateur 202 configuré pour détecter chaque usager présent dans chaque image de l'ensemble d'images à l'aide du réseau de neurones artificiels et pour compter le nombre d'usagers détecté dans chaque image de l'ensemble d'images et donc réaliser la deuxième étape 102 du procédé 100 selon l'invention ;
- un deuxième calculateur 203 configuré pour fusionner les données de comptage obtenues et les données origine-destination et donc réaliser la troisième étape 103 du procédé 100 selon l'invention.

Le premier calculateur 202 et le deuxième calculateur 203 peuvent être confondus ou distincts, et embarqués au sein d'un même dispositif ou non.

Par exemple, sur la figure 2, le module d'acquisition 201 et le premier calculateur 202 sont embarqués au sein d'un dispositif, par exemple une caméra, et le deuxième calculateur 203 est par exemple situé à distance du dispositif.

Dans ce cas, le premier calculateur 202 est par exemple un microprocesseur et le deuxième calculateur 203 est par exemple un serveur.

Dans le cas où le premier calculateur 202 et le deuxième calculateur 203 ne sont pas embarqués au sein d'un même dispositif, le premier calculateur 202 comporte par exemple un module de transmission configuré pour transmettre les données de comptage au deuxième calculateur 203.

Le système 200 selon l'invention peut comporter en outre un capteur de pollution sonore et/ou un capteur de pollution atmosphérique.

## Revendications

1. Procédé (100) d'évaluation du nombre de déplacements d'usagers passant par un point de passage donné, chaque déplacement étant réalisé d'une origine vers une destination définissant un couple origine-destination, l'évaluation étant réalisée par couple origine-destination, le procédé (100) comportant les étapes suivantes :
- Acquisition (101) d'un flux d'images dudit point de passage ;
- Traitement (102) de chaque image d'un ensemble d'images comportant au moins une image du flux d'images acquis, l'étape de traitement (102) comprenant les sous-étapes suivantes :
∘ Détection (1021) de chaque usager présent dans l'image à l'aide d'un réseau de neurones artificiels, le réseau de neurones artificiels ayant été préalablement entraîné de manière supervisée sur une base de données d'entraînement pour obtenir un réseau de neurones artificiels entraîné capable de détecter à partir d'une image, chaque usager dans l'image, la base de données d'entraînement comprenant une pluralité d'images chacune associée à la position de chaque usager dans l'image ;
∘ Comptage (1022) automatique du nombre d'usagers détecté dans l'image pour obtenir des données de comptage ;
- Fusion (103) des données de comptage obtenues et de données origine-destination relatives à l'origine et à la destination d'une partie des usagers passant par le point de passage, pour obtenir au moins une matrice origine-destination pour le point de passage.

2. Procédé (100) selon la revendication 1, dans lequel les données origine-destination comprennent des données issues de systèmes embarqués de géolocalisation et/ou des données issues de la téléphonie mobile.

3. Procédé (100) selon l'une quelconque des revendications précédentes, dans lequel l'étape de traitement (102) est réalisée à la volée.

4. Procédé (100) selon l'une quelconque des revendications précédentes, dans lequel l'étape de traitement (102) comprend en outre une sous-étape de classification (1023) de chaque usager détecté dans l'image à l'aide du réseau de neurones artificiels, le réseau de neurones artificiels ayant été entraîné en outre pour obtenir un réseau de neurones artificiels entraîné capable à partir d'une image, d'affecter une classe à chaque usager détecté dans l'image, la base de données d'entraînement comprenant en outre pour chaque image de la pluralité d'images, la classe associée à chaque usager présent dans l'image.

5. Procédé (100) selon l'une quelconque des revendications précédentes, dans lequel l'étape de fusion (103) est réalisée à l'aide de l'algorithme FRATAR.

6. Procédé (100) selon l'une quelconque des revendications précédentes, dans lequel l'étape de fusion (103) est réalisée pour chaque période d'un ensemble de périodes prédéterminé à partir des données de comptage obtenues et des données origine-destination relatives à la période.

7. Système (200) pour la mise en oeuvre du procédé (100) selon l'une quelconque des revendications précédentes, comprenant :
- Un module d'acquisition (201) configuré pour acquérir le flux d'images ;
- Un premier calculateur (202) configuré pour détecter chaque usager présent dans chaque image de l'ensemble d'images à l'aide du réseau de neurones artificiels et pour compter le nombre d'usagers détecté dans chaque image de l'ensemble d'images ;
- Un deuxième calculateur (203) configuré pour fusionner les données de comptage obtenues et les données origine-destination.

8. Système (200) selon la revendication 7, comportant en outre un capteur de pollution sonore et/ou un capteur de pollution atmosphérique.

9. Produit-programme d'ordinateur comprenant des instructions qui, quand le programme est exécuté sur un ordinateur, conduisent celui-ci à mettre en oeuvre les étapes du procédé selon l'une quelconque des revendications 1 à 6.

10. Support d'enregistrement lisible par ordinateur comprenant des instructions qui, lorsqu'elles sont exécutées par un ordinateur, conduisent celui-ci à mettre en oeuvre les étapes du procédé selon l'une quelconque des revendications 1 à 6.
